# EUROPEAN PATENT SPECIFICATION

(11) **EP 2 384 466 B1**
(45) Date of publication and mention of the grant of the patent: **25.11.2015**
(21) Application number: 09836551.3
(22) Date of filing: 03.07.2009
(51) Int. Cl.: G06F 3/02, H01H 13/85, G06F 3/0488, G06F 3/01, G06F 3/044

(54) **USER INTERFACE SYSTEM AND METHOD**
BENUTZEROBERFLÄCHENSYSTEM UND -VERFAHREN
SYSTÈME D'INTERFACE UTILISATEUR ET PROCÉDÉ

(30) Priority: 05.01.2009 US 319334
(43) Date of publication of application: 09.11.2011
(73) Proprietor: Tactus Technology, Inc., Mountain View, CA 94041 (US)
(72) Inventor: CIESLA, Craig, Michael, Mountain View, CA 94041 (US); YAIRIM, Michah, B., Palo Alto, CA 94306 (US)
(74) Representative: Stanners, David Ralph
(86) International application number: PCT/US2009/049651
(87) International publication number: WO 2010/077382

(56) References cited:
- WO-A2-2004/028955
- US-A- 4 109 118
- US-A- 4 209 819
- US-A- 4 517 421
- US-A- 4 584 625
- US-A- 4 920 343
- US-A- 5 194 852
- US-A- 5 742 241
- US-A1- 2002 110 237
- US-A1- 2005 007 349
- US-A1- 2007 013 662
- US-A1- 2007 171 210
- US-A1- 2007 273 561
- US-A1- 2008 248 836
- US-A1- 2009 002 328
- US-B2- 6 636 202
- US-B2- 6 930 234

## Description

### BACKGROUND

Static user input interfaces, such as those on a typical television remote control or on a mobile phone, provide users with one user interface that locks the interaction modes available between the device and the user. Devices with a static user input interface that may be used with a variety of applications also become very complicated because the static user input interface must be compatible with each application. In the case of universal remotes, user interaction may become very confusing for the user because of the abundance of buttons available that may either provide dual functionality between devices or are extraneous for any one particular device. In the case of mobile devices, such as a cellular phone with multiple functionalities that uses a static user input interface, adapting the available static user input interface to the plurality of functionalities of the device is also challenging. Additionally, as mobile devices become smaller and more powerful, functionality of the device may be severely hindered by a static user input interface.

Touch sensitive displays, e.g., touch screens, are able to provide a dynamic user input interface and are very useful in applications where the user interface is applied to a variety of uses, for example, in a universal remote where the user interface may change to adapt to the device that is being controlled by the user or in a cellular phone with multiple functionalities. However, unlike a static user input interface with a dedicated input device, such as a keypad with discrete well-defined keys, most touch sensitive displays are generally flat. As a result, touch sensitive displays do not provide any of the tactile guidance that may be seen in static user interfaces.

Hence, serious drawbacks exist in current commonly available user interfaces. In the case of a static user input interface, there is the benefit of tactile guidance but the serious drawback of inability to adapt to an application type. In the case of a touch sensitive display, there is the benefit of an adaptable display and dynamic user input interface but the serious drawback of no tactile guidance, resulting in incorrectly entered keystrokes and the need for the user to keep his or her eyes on the display. The importance of tactile guidance is readily apparent in the competition between the Apple iPhone and the Blackberry 8800. Additionally, with many touch sensitive displays, each touch made by the user is registered with the system, preventing the user from resting his or her finger on the surface of the display. In some touch sensitive displays, the reliance on the change in capacitance due to the presence of a finger at a location as the occurrence of a user input results in the inability for the touch sensitive display to detect user inputs when the user is wearing a glove or when other barriers between a finger and the screen are present.

US2008/248836 A1 (CAINE MICHAEL E [US]) 9 October 2008 (2008-10-09) discloses a portable device including a controllable skin texture surface that includes a skin texture surface actuation structure that includes a hydraulic actuation structure and a flexible skin structure that moves in response to movement of fluid to change a tactile configuration of at least a portion of the controllable skin texture surface. In one example, a substrate includes one or more fluid channels and the flexible skin structure includes a plurality of fluid pockets corresponding to texture features that are in fluid communication With at least one fluid channel. A fluid pump that moves the fluid in and out of the fluid passages may be controlled either by electronic control sig nals or mechanical movement of a movable housing portion.

This invention provides a new and useful user interface that combines many of the advantages of the benefits of a static user input interface and many of the advantages of a dynamic user input interface.

### BRIEF DESCRIPTION OF THE FIGURES

FIGURES 1a and 1b are a top view of the user interface system of an example of the invention and a cross-sectional view illustrating the operation of a button array in accordance to an example of the invention, respectively.
FIGURES 2a, 2b, and 2c are cross-sectional views of the retracted, extended, and user input modes of an example of the invention, respectively.
FIGURE 3 is a cross-sectional view of the sheet, the cavity, the sensor, and the display of an example of the invention.
FIGURE 4 is a cross-sectional view of the sheet split into a layer portion and a substrate portion.
FIGURES 5a and 5b are cross-sectional views of the sheet, the cavity, the sensor, and a displacement device that modifies the existing fluid in the cavity, with the cavity in a retracted volume setting and an expanded volume setting, respectively.
FIGURE 6 is a schematic view of the sheet, the cavity, the sensor, and a displacement device of a first example that displaces additional fluid into the cavity.
FIGURE 7 is a schematic view of the sheet, the cavity, the sensor, and a displacement device of a second example that displaces additional fluid into the cavity.
FIGURES 8a and 8b are schematic views of the sheet, the cavity, the sensor, and a displacement device of a third example that displaces additional fluid into and out of the cavity, with the cavity in a retracted volume setting and an expanded volume setting, respectively.
FIGURES 9a, 9b, 10a, 10b, 11a, 11b, 12a and 12b are top and side views of a button deformation, a slider deformation, a slider ring deformation, a guide deformation, and a pointing stick deformation, respectively.
FIGURE 13 is a cross-sectional view of a preferred embodiments with a support structure and a sensor that detects user touch through the support structure.
FIGURES 14a, 14b, 14c, and 14d are schematic views of a first, second, third, and fourth example of a first variation of the sensor as a capacitive sensor, respectively.
FIGURES 15a and 15c are schematic representations of a first and second method of measuring capacitance of a first variation of the sensor as a capacitive sensor, respectively.
FIGURES 16a, 16b, and 16c are schematic views of a first, second, and third example of the placement of the conductors of the sensor as a capacitive sensor, respectively.
FIGURES 17a and 17b are schematic views of a first and second example of a second variation of the sensor as a capacitive sensor, respectively.
FIGURES 18a-18e are schematic representations of a variety of geometries for the sensor as a capacitive sensor.
FIGURES 19a and 19b are schematic views of a first and second variation of the sensor as a pressure sensor, respectively.
FIGURE 20 is a flow chart of the different operation modes of the preferred embodiments.
FIGURES 21a-21d are a schematic of the different input graphics, different cavity settings, and different user touches of the preferred embodiments.

### DESCRIPTION OF THE PREFERRED EMBODIMENTS

The following description of the preferred embodiments of the invention is not intended to limit the invention to these preferred embodiments, but rather to enable any person skilled in the art to make and use this invention.

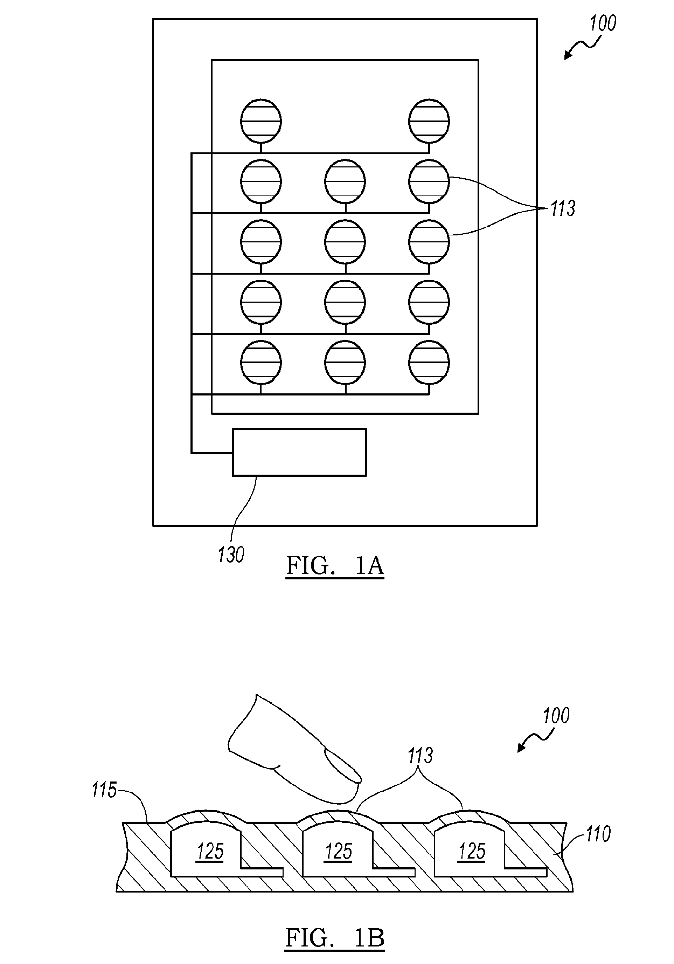

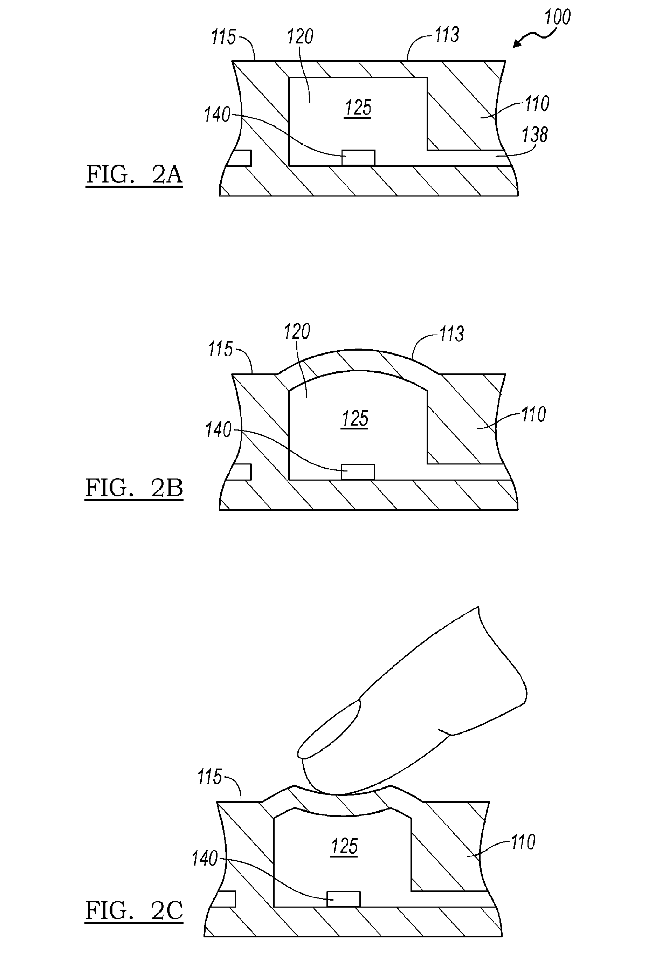

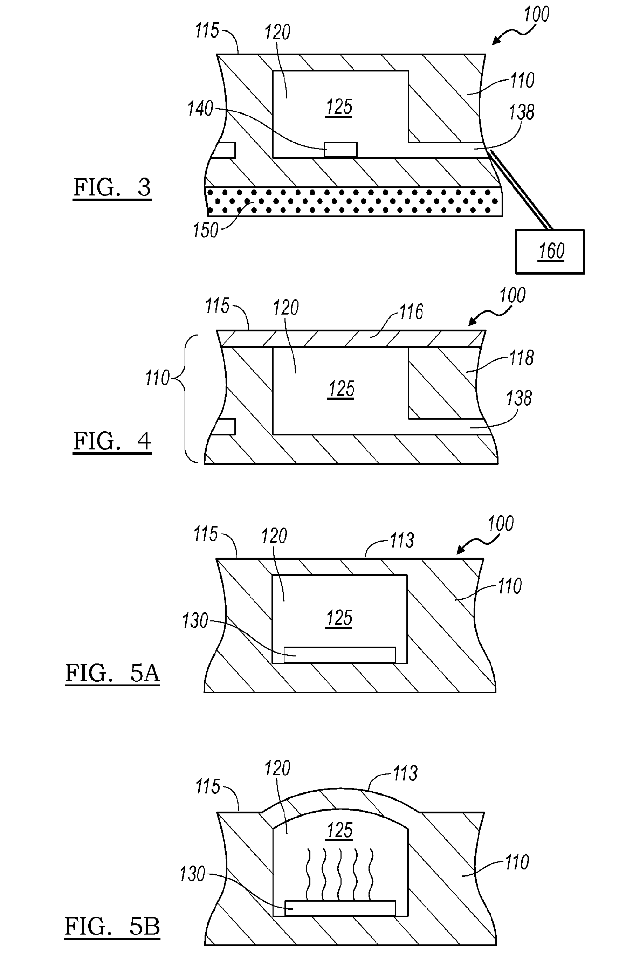

As shown in FIGURES 1 and 2, the user interface system 100 of examples of the invention includes a sheet 110 that defines a surface 115 and a cavity 125, a volume of a fluid 120 contained within the cavity 125, a displacement device 130 that modifies the volume of the fluid 120 to expand the cavity 125 (thereby outwardly deforming a particular region 113 of the surface 115), and a sensor 140 that detects a force applied by a user that inwardly deforms the particular region 113 of the surface 115. As shown in FIGURE 3, the user interface system 100 may also include a display 150 coupled to the sheet 110 and adapted to output images to the user and a processor 160 that is preferably coupled to the sensor 140 to receive signals from the sensor 140 and coupled to the displacement device 130 to send signals to the displacement device 130. The sensor 140 may also be located in between the sheet 110 and the display 150. However, any other suitable arrangement of the components of the system 100 may be used.

The user interface system 100 of the preferred embodiments has been specifically designed to be used as the user interface for an electronic device, more preferably in an electronic device that benefits from an adaptive user interface. The electronic device, which may or may not include a display, may be an automotive console, a desktop computer, a laptop computer, a tablet computer, a television, a radio, a desk phone, a mobile phone, a PDA, a personal navigation device, a personal media player, a camera, a watch, a remote, a mouse, a trackpad, or a keyboard. The user interface system 100 may, however, be used as the user interface for any suitable device that interfaces with a user in a tactile and/or visual manner. As shown in FIGURE 2, the surface 115 of the user interface system 100 preferably remains flat until a tactile guidance is to be provided at the location of the particular region 113. The surface 115 of the user interface system 100 may also be deformed when a user input is required. At that time, the displacement device 130 expands the cavity 125 to deform and/or expand the particular region 113 outward, preferably forming a button-like shape. With the button-like shape, the user will have tactile guidance when navigating for the expanded particular region 113 and will have tactile feedback when applying force onto the particular region 113 to provide input. The sensor 140 preferably senses the force that inwardly deforms the particular region 113. However, any other arrangement of the user interface system 100 suitable to providing tactile guidance and/or detecting user input may be used.

### 1. The Sheet

As shown in FIGURES 1 and 2, the sheet 110 of examples of the invention functions to provide the surface 115 that interfaces with a user in a tactile manner and to at least partially define the cavity 125. The surface 115 is preferably continuous, such that when swiping a finger across the surface 115 a user would not feel any interruptions or seams. Alternatively, the surface 115 may include features that facilitate the user in distinguishing one region from another. The surface 115 is also preferably planar. The surface 115 is preferably arranged in a flat plane, but may alternatively be arranged in a curved or warped plane. The surface 115 also functions to deform upon an expansion of the cavity 125, and to preferably "relax" or "un-deform" back to a normal planar state upon retraction of the cavity 125. In one version, the sheet 110 contains a first portion that is elastic and a second portion that is relatively less elastic. In another version, sheet 110 is relatively more elastic in specific areas and relatively less elastic in other areas and is deformed by the expanded cavity 125 in the relatively more elastic areas. In another version, the sheet 110 is generally of the same elasticity. In yet another version, the sheet 110 includes or is made of a smart material, such as Nickel Titanium (commonly referred to as "Nitinol"), that has a selective and/or variable elasticity. The sheet 110 is preferably optically transparent, but may alternatively be translucent or opaque. In addition to the transparency, the sheet 110 preferably has the following properties: a high transmission, a low haze, a wide viewing angle, a minimal amount of back reflectance upon the display (if the display is included with the user interface system 100), scratch resistant, chemical resistant, stain resistant, relatively smooth (not tacky) to the touch, no out-gassing, and/or relatively low degradation rate when exposed to ultraviolet light. The sheet 110 is preferably made from a suitable elastic material, including polymers and silicon-based elastomers such as poly-dimethylsiloxane (PDMS) or RTV Silicon (e.g., RTV Silicon 615). In the version wherein the sheet 110 includes a first portion that is elastic and a second portion that is relatively inelastic, the inelastic portion is preferably made from a material including polymers or glass, for example, elastomers, silicon-based organic polymers such as poly-dimethylsiloxane (PDMS), thermoset plastics such as polymethyl methacrylate (PMMA), photocurable solvent resistant elastomers such as perfluropolyethers, polyethylene terephthalate (PET), or any other suitable material. The sheet 110 may, however, be made of any suitable material that provides the surface 115 that deforms and defines a cavity 125. The sheet 110 may be manufactured using well-known techniques for micro-fluid arrays to create one or more cavities and/or micro channels. The sheet 110 may be constructed using multiple layers from the same material or from different suitable materials, for example, the sheet 110 may include a layer portion 116 of one material that defines the surface 115 and a substrate portion 118 of a second material (as shown in FIGURE 4). The substrate portion 118 functions to support the layer portion 118 and to at least partially define the cavity 125. However, any other suitable arrangement, material, and manufacturing method may be used to create sheet 110.

As shown in FIGURE 2, the cavity 125 of an example of the invention functions to hold a volume of fluid 120 and to have at least two volumetric settings: a retracted volume setting (shown in FIGURE 2a) and an extended volume setting (shown in FIGURE 2b). The fluid 120 is preferably a substantially incompressible fluid, but may alternatively be a compressible fluid. The fluid 120 is preferably a liquid (such as water, glycerin, or ethylene glycol), but may alternatively be a gas (such as air, nitrogen, or argon) or any other substance (such as a gel or aerogel) that expands the cavity 125 and deforms the surface 115. In the extended volume setting, the cavity 125 deforms the particular region 113 of the surface 115 above the plane of the other regions of the surface 115. When used with a mobile phone device, the cavity 125 preferably has a diameter of 2-10mm. When used with this or other applications, however, the cavity 125 may have any suitable dimension.

### 2. The Displacement Device

The displacement device 130 of the preferred embodiment functions to influence the volume of the fluid 120 to expand the cavity 125 from the retracted volume setting to the extended volume setting and, ultimately, deforming a particular region 113 of the surface 115. The displacement device 130 preferably modifies the volume of the fluid 120 by (1) modifying the volume of the existing fluid in the cavity 125, or (2) adding and removing fluid to and from the cavity 125. The displacement device 130 may, however, influence the volume of the fluid 120 by any suitable device or method. Modifying the volume of the existing fluid in the cavity 125 most likely has an advantage of lesser complexity, while adding and removing fluid to and from the cavity 125 most likely has an advantage of maintaining the deformation of the surface 115 without the need for additional energy (if valves or other lockable mechanisms are used). When used with a mobile phone device, the displacement device 130 preferably increases the volume of the fluid 120 within the cavity 125 by approximately 0.003-0.1 ml. When used with this or other applications, however, the volume of the fluid may be increased (or possibly decreased) by any suitable amount.

Modifying the existing fluid in the cavity 125 may be accomplished in several ways. In a first example, as shown in FIGURES 5a and 5b, the fluid may be an expandable fluid and the displacement device 130 may include a heating element that heats the expandable fluid, thereby expanding the volume of the existing fluid in the cavity 125 (according to the ideal gas law, PV=nRT). The heating element, which may be located within, adjacent the cavity 125, or any other location suitable to providing heat to the fluid, is preferably a resistive heater (made of a material such as TaN or Nichrome). In a second example, the fluid may include an expandable substance, such as plastic expandable microspheres. In a third example, the fluid may include paraffin. While these are three examples, the displacement device 130 can be any other suitable device or method that ultimately expands the cavity 125 from the retracted volume setting to the extended volume setting by modifying the existing fluid in the cavity 125.

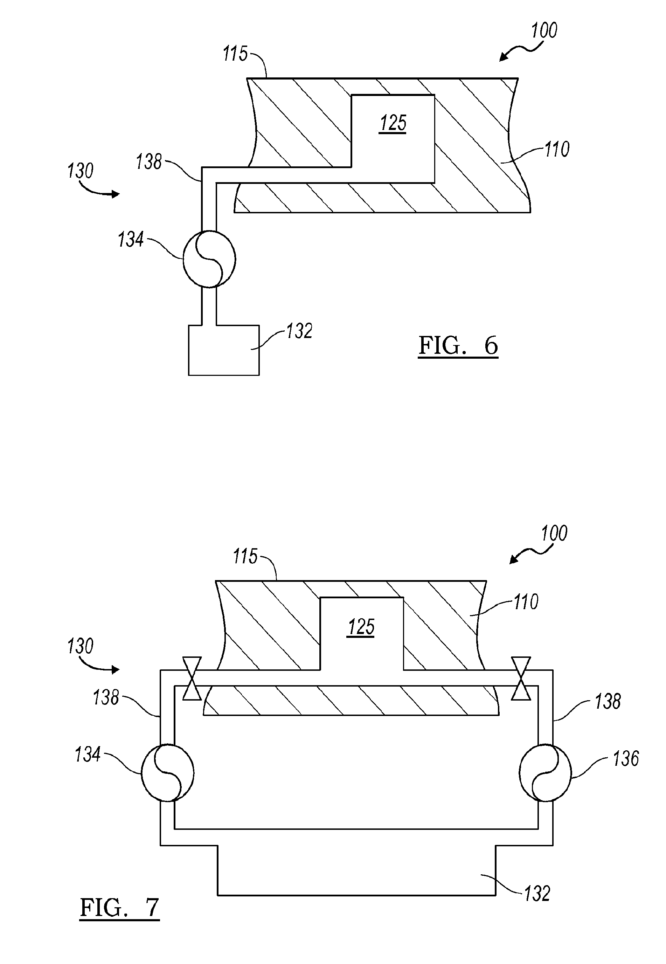

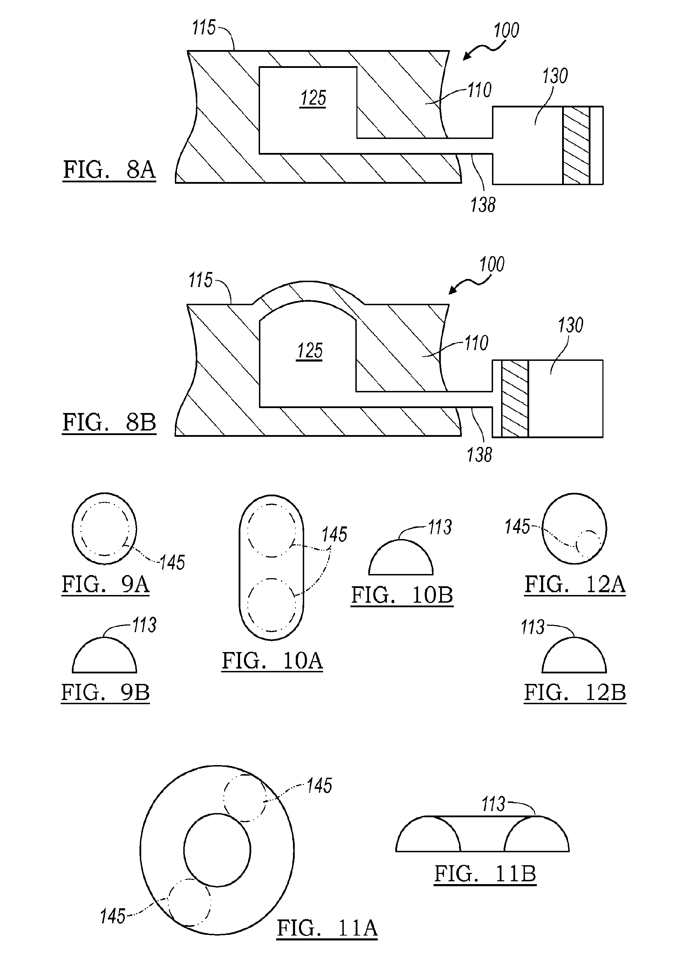

Adding and removing fluid to and from the cavity 125 may also be accomplished in several ways. In a first example, as shown in FIGURE 6, the displacement device 130 includes a reservoir 132 to hold additional fluid and a pump 134 to displace fluid from the reservoir 132 to the cavity 125. The reservoir 132 is preferably remote from the cavity 125 (and connected by a channel 138 or other suitable device), but may alternatively be located adjacent the cavity 125 and connected directly to the cavity 125. A portion of the channel 138 is preferably a micro-fluidic channel (having cross-section dimensions in the range of 1 micrometer to 1000 micrometers), but depending on the size and costs constraints of the user interface system 100, the channel 138 may have any suitable dimensions. The pump 134 is preferably a micro-pump (such as pump #MDP2205 from ThinXXS Microtechnology AG of Zweibrucken, Germany or pump #mp5 from Bartels Mikrotechnik GmbH of Dortmund, Germany), but may be any suitable device to pump fluid from one location to another. The pump 134 is preferably located at a distance from the cavity 125, and is preferably connected to the cavity 125 by a channel 138. To extend the cavity 125 from a retracted volume setting to the extended volume setting, the pump 134 displaces fluid from a reservoir 132, through the channel 138, and into the cavity 125. To retract the cavity 125 from the extended volume setting to the retracted volume setting, the pump 134 preferably "vents" or pumps in a reverse direction from the cavity 125 to the reservoir 132. In a second example, as shown in FIGURE 7, the displacement device 130 includes a reservoir 132 to hold additional fluid, a first pump 134 to displace fluid from the reservoir 132 to the cavity 125, a second pump 136 to displace fluid from the cavity 125 to the reservoir 132, a first valve located between the first pump 134 and the cavity 125, and a second valve located between the cavity 125 and the second pump 136. To extend the cavity 125 from the retracted volume setting to the extended volume setting, the first valve is opened, the second valve is closed, and the first pump 134 displaces fluid from the reservoir 132, through the channel 138, and into the cavity 125. To retract the cavity 125 from the extended position to the retracted position, the first valve is closed, the second valve is opened, and the second pump 136 displaces fluid from the cavity 125, through the channel 138, and into the reservoir 132. In other respects, the second example is similar to the first example above. The user interface system 100 may omit the second pump 136 and simply retract the cavity 125 from the extended volume setting to the retracted volume setting by opening the second valve and allowing the cavity 125 to vent or "drain" into the reservoir 132 (potentially assisted by the elasticity of the sheet 110 returning to an un-deformed state). In a third example, as shown in FIGURES 8a and 8b, the displacement device 130 includes an actuator, such as a linear actuator, that displaces fluid into and out of the cavity 125. To extend the cavity 125 from a retracted volume setting to the extended volume setting, as shown in FIGURE 8a, the linear actuator displaces fluid through the channel 138 and into the cavity 125. To retract the cavity 125 from the extended volume setting to the retracted volume setting, as shown in FIGURE 8b, the linear actuator draws fluid in a reverse direction from the cavity 125 to the reservoir 132. In other respects, the third example is similar to the second example above. While these are three examples, the displacement device 130 can be any other suitable device or method that ultimately expands the cavity 125 from the retracted volume setting to the extended volume setting by adding and removing fluid to and from the cavity 125.

Although the cause of the deformation of a particular region 113 of the surface 115 has been described as a modification of the volume of the fluid in the cavity 125, it is possible to describe the cause of the deformation as an increase in the pressure below the surface 115 relative to the pressure above the surface 115. When used with a mobile phone device, an increase of approximately 0.1-10.0 psi between the pressure below the sheet 110 relative to the pressure above the sheet 110, is preferably enough to deform a particular region 113 of the surface 115. When used with this or other applications, however, the modification of the pressure may be increased (or possibly decreased) by any suitable amount.

### 3. The Deformation of the Surface and the Sensor

The deformation of the particular region 113 functions to provide tactile feedback and tactile guidance on the surface 115 for the user. The deformation of the particular region 113 also preferably functions to inform the user of the type of input the deformation represents. For example, the deformation of the particular region 113 may be of a shape that indicates the type of input that the deformation represents. For example, a circular deformation may indicate to the user that they are to select an area along the circular deformation. Alternatively, the sheet 110 may include tactile instructions, for example, a pattern of beads on the particular region 113 that indicate the type of input the deformation represents, for example, a deformation may have a tactile pattern of beads that indicate an arrow, informing the user that the deformation is for a directional input. The tactile instructions on the particular region 113 may alternatively be any other type of feature that is able to be felt tactilely by the user. The sheet 110 of the user interface 100 may also be coupled to a graphic (e.g, a paper insert, a photo, etc.) to indicate to the user the input that is associated with depressing the deformed particular region 113. When used in conjunction with the display 150, the user is preferably shown at least one image that is an image of a visual guide or an input key that is substantially aligned with the particular region 113. The display 150 may also display at least two images, with at least one image substantially aligned with the particular region 113 and functioning to visually differentiate the particular region 113 from the rest of the surface 115 and indicating a visual guide or an input key that the deformed particular region 113 represents. From the user's perspective, the device is asking for a user input through the display 150 and the user interface system 110 is providing tactile guidance and tactile feedback when the user indicates the desired input. The two images may alternatively include a first image and a second image. The first image is displayed and substantially aligned with the particular region 113 and then the second image is displayed and substantially aligned with the particular region 113 when the first image is removed. However, any other arrangement of the user interface system 100 suitable to interfacing with the user may be used.

The deformation preferably acts as (1) a button that, when pressed by the user, signals an input to the sensor 140 (2) a slider that may be pressed at multiple points along the deformation by the user and that signals the location of multiple inputs on the sensor 140, and/or (3) a pointing stick that signals the location of multiple inputs on sensor 140. The deformation may, however, act as any other suitable device or method that signals a user input to the sensor 140. The button, as shown in FIGURES, 9a and 9b preferably has a dome-like shape, but may alternatively have a cylindrical-like shape (with a flat top surface), a pyramid-like shape, a cube-like shape (with a flat top), or any other suitable button shape. The sensor 140 preferably recognizes any user touch 145 into the button as a user input. The slider, as shown in FIGURES 10a, 10b, 11a and 11b, preferably has a ridge like shape (shown in FIGURES 10a and 10b), but may alternatively have a ring like shape (shown in FIGURES 11a and 11b), a plus-like shape, or any other suitable slider shape. The sensor 140 preferably recognizes user touches 145 at different locations into the slider and distinguishes these user touches as different user inputs. As an example, the slider with the ring like shape may act like the "click wheel" of the Apple iPod (second generation). The pointing stick, like the button, preferably has a dome-like shape, as shown in FIGURES 12a and 12b, but may alternatively have a cylindrical-like shape (with a flat top surface), a pyramid-like shape, a cube-like shape (with a flat top), or any other suitable button shape. The sensor 140 preferably recognizes user touches 145 at different locations along the pointing stick and distinguishes these user touches as different user inputs. A depression from the force applied by the user on a portion of the pointing stick is meant to signal a user input in the location of the depression relative to the geometry of the pointing stick. For example, in the variation wherein the pointing stick is a dome-like shape, a depression by the user in the upper right quadrant will be interpreted differently than a depression by the user in the lower right quadrant. Additionally, the user may depress the pointing stick in a sweeping motion, for example, a "sweep" from the upper right quadrant to the lower right quadrant. This may be interpreted as a moving input, similar to that seen in the "click wheel" of the Apple iPod (second generation). In another example, the point stick may act like the pointing stick trademarked by IBM as the TRACKPOINT and by Synaptics as the TOUCHSTYK (which are both informally known as the "nipple").

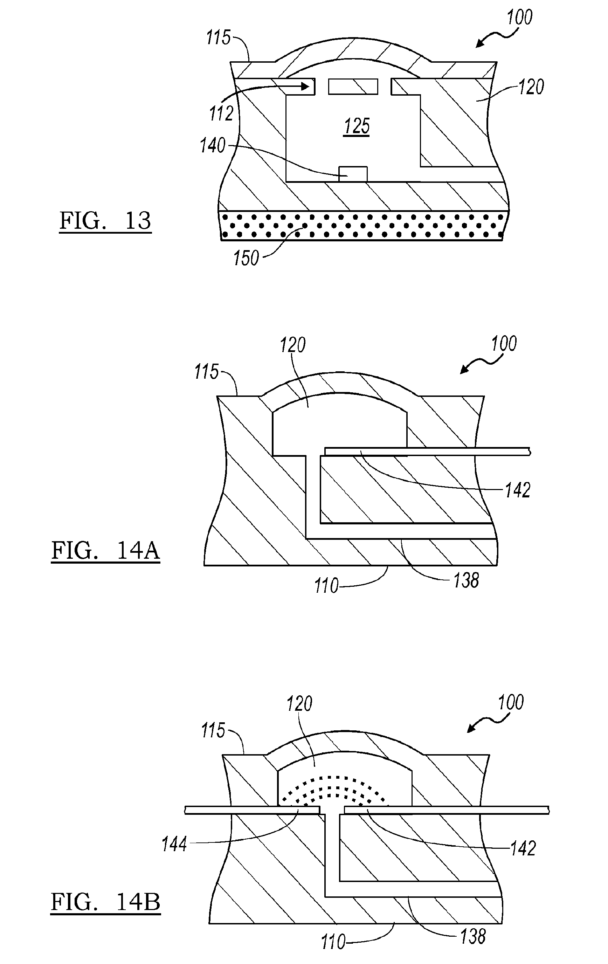

The sensor 140 may be located within the cavity 125 and/or adjacent to the cavity 125, but may alternatively be located in any other suitable location. In a variation of the sheet 110 and the cavity 125 that includes a support element 112 underneath the surface 115 for the particular region 113 as shown in FIGURE 13, a sensor 140 preferably functions to sense a user input through the support element 112 from any location. The sensor 140 preferably detects the presence of a user touch, an inward depression of the expanded particular region 113, and/or any other suitable user input. The sensor may 140 may also function to detect the direction of the user input, the location of the user input, the rate at which the user is inwardly deforming the expanded particular region 113, the level to which the user is inwardly deforming the expanded particular region 113, the type of user input (for example, input by finger or by stylus), and/or any other suitable characteristic of the user input.

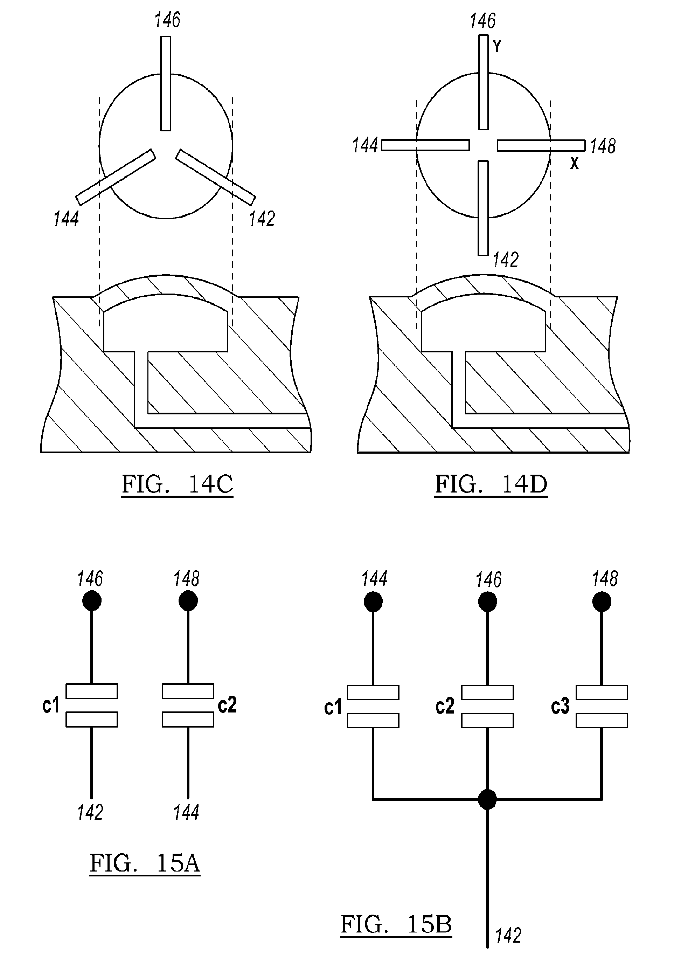

The sensor 140 is preferably a capacitive sensor that includes at least two conductors that detects a fluctuation in an electric field created by the at least two conductors of the capacitive sensor. The fluctuation may be caused by a user touch, user input through a stylus or any other suitable input assist element, the deformation of the particular region 113, change in fluid position/volume, or any other event that may cause a fluctuation in the electric field that may result in a change in the measured capacitance. The capacitive sensor and is preferably one of several variations. In a first variation, the capacitive sensor includes a first conductor 142 and a second conductor that is a virtual conductor. For example, the virtual conductor may be the virtual ground (such as the shielding ground or the case ground) of the device that the user interface system 100 is appended to, a screen ground for the display 150, or, if the device is a cellular phone, the RF/Signal ground of the device. Fluctuations in the electric field generated between the first conductor 142 and the virtual ground may be used to detect the presence of touch or an input. As shown in FIGURE 14, the capacitive sensor is adapted to sense height changes of the fluid 120 within the cavity 125 and/or the presence of a finger on the deformed particular region 113. As shown in FIGURE 14a, the first conductor 142 is preferably placed in a location within or adjacent the cavity wherein the inward deformation of the particular region 113 will change the height of the fluid 120 relative to the first conductor 142, thereby influencing the measured capacitance of the capacitive sensor. The first conductor 142 is preferably located on the bottom side of the cavity opposite of the surface 115, allowing the capacitive sensor to sense height changes of the fluid as the particular region 113 is inwardly deformed, but may alternatively be located at the side of the cavity adjacent to the surface 115. When placed adjacent to the surface 115, the first conductor 142 preferably deforms with the particular surface 113 as the user applies force to allow a change in the height of fluid 120 to be sensed. The first conductor 142 may alternatively be placed in any suitable location to allow changes in the height of fluid 120 due to inward deformation of the particular surface 113 to be sensed. The first conductor 142 is preferably made of copper, micro or nanowire, or a transparent conductor such as sputtered indium tin oxide (ITO), but may alternatively be of any type of conductive material wherein the measured capacitance of the conductor is sensitive to height changes of the fluid 120. The capacitive sensor may also function to detect a capacitance change relative to the surface 115 due to the presence of the finger of the user.

As shown in FIGURE 14b, capacitive sensor of the first variation may include a first conductor 142 and a second conductor 144 that is placed within the cavity 125. The second conductor 144 may be used measure the change in capacitance in between the first conductor 142 and the second conductor 144 as the user inwardly deforms the particular region 113. For example, as the user inwardly deforms the particular region 113, the amount of fluid 120 and/or the height of the fluid 120 in between the first conductor 142 and the second conductor 144 may change, causing a change in measured capacitance in between the first conductor 142 and the second conductor 144. The gradient of height difference in between the first conductor 142 and the second conductor 144 may also yield a measurable change in the capacitance in between the first conductor 142 and the second conductor 144. For example, the capacitance reading between the first conductor 142 and the second conductor 144 when the user inwardly deforms the particular region 113 closer to the first conductor 142 may be different from the capacitance reading between the first conductor 142 and the second conductor 144 when the user inwardly deforms the particular region 113 closer to the second conductor 144. This difference may facilitate determining the location of the user input relative to the geometry of the particular region 113. Alternatively, the second conductor 144 may be used to measure height changes of the fluid 120 in the region above the second conductor 144 to work in tandem with the first conductor 142 to provide a more local capacitive measurement of height changes within the cavity 125. Measuring local capacitive changes within the cavity 125 also allows a relative height difference in the fluid 120 to be measured. For example, as the user inwardly deforms the particular region 113, the height of the fluid 120 over the first conductor 142 may be different from the height of the fluid over the second conductor 144, resulting in a difference in the measured capacitance value of the first conductor 142 and the measured capacitance value of the second conductor 144 relative to the surface 115. The capacitance between the first conductor 142 and a first portion of the second conductor 144 may also be compared to the capacitance between the first conductor 142 and a second portion of the second conductor 144 to determine the relative difference in the height of the fluid 120. The relative difference in capacitive values between the two conductors 142 and 144 may facilitate the determination of the location of the user input relative to the geometry of the particular region 113. The first and second portions of the second conductor 144 may be continuous sections along the second conductor 144, but may alternatively be separated by a third portion of a different material from the first and second portions or a break in the second conductor 144. The second conductor 144 may include the first portion and also include a third conductor 146 that contains the second portion. However, any other suitable arrangement and method to determine the occurrence and/or location of a user input through the conductors may be used. The second conductor 144 is preferably identical to the first conductor 142 in material and manufacturing, but may alternatively be made of any material or method suitable to providing a capacitive relationship with the first conductor 142.

As shown in FIGURE 14c and FIGURE 14d, the capacitive sensor of the first variation may also include a third conductor 146 and/or a fourth conductor 148. The addition of a third and/or fourth conductor 146 and 148 allows for more accurate determination of the location of user input relative to the geometry of the particular region 113. For example, in the case of four conductors, as shown in FIGURE 14d, the particular region 113 may be divided into a four quadrant coordinate system through an X and Y axis with the origin substantially in the center of the particular region 113. In this example, the location of the user input relative to the geometry of the particular region 113 may be measured in a variety of methods. In a first method, as shown in FIGURE 15a, the capacitance and/or the relative capacitance between the first conductor 142 and the third conductor 146 may be measured to determine the location of the user input along the X-axis and the capacitance and/or the relative capacitance between the second conductor 144 and the fourth conductor 148 may be measured to determine the location of the user input along the Y-axis. The measured location along the X-axis and the measured location along the Y-axis are then used to determine the location of the user input within the four quadrant coordinate system. In a second method, as shown in FIGURE 15b, three capacitance and/or relative capacitance values are measured: between the first conductor 142 and the second conductor 144, between the first conductor 142 and the third conductor 146, and between the first conductor 142 and the fourth conductor 148. The three capacitance values are then preferably used to determine the location of the user input within a four quadrant coordinate system (which can be superimposed over the "tridrant" coordinate system). Similarly, the same methods and/or relationships may be applied to the case of three conductors or any other suitable number of conductors. However, any suitable number of conductors and any other method or relationship between the conductors suitable to determine the location of the user input relative to the geometry of the particular region 113 may be used. The third conductor 146, fourth conductor 148, and/or any other suitable number of conductors are preferably identical to the first conductor 142 in material and manufacturing, but may alternatively made of any material or method suitable to providing a capacitive relationship with the first conductor 142 and/or other conductors.

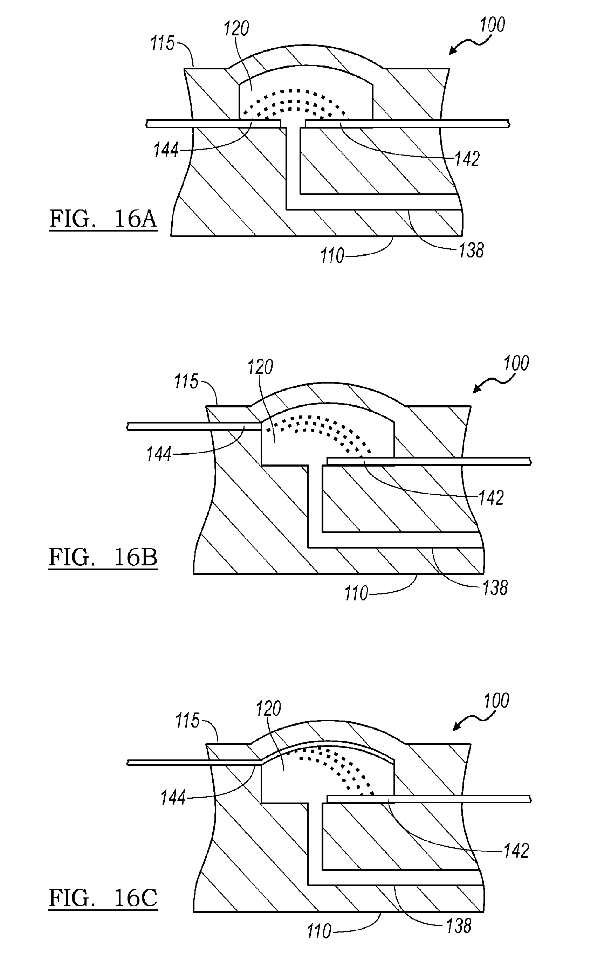

As shown in FIGURE 16a, the first conductor 142 is preferably placed at a first level relative to the cavity and the second, third, fourth conductors 144, 146, 148, and/or any other suitable number of conductors are placed at the same level relative to the cavity. Alternatively, as shown in FIGURE 16b, the first conductor 142 may be placed at a first level relative to the cavity and the second conductor 144 may be placed at a second level relative to the cavity. In this variation, the second level is preferably higher than the first level, but may alternatively be lower than the first level. The third, fourth conductors 146, 48 and/or any other suitable number of conductors may also be placed at the second level, but may alternatively be located at a third and/or fourth level relative to the cavity. The difference in location placement relative to the height level within the cavity may facilitate accurate measurement of the location of user input relative to the geometry of the particular region 113. Additionally, in the variation of the sheet 115 wherein the sheet 115 includes a layer portion 116 and a substrate portion 118, the first conductor 142 may be coupled to the substrate portion 118 and the second conductor 144 may be coupled to the layer portion 116, as shown in FIGURE 16c. However, any other combination of placement of the conductors of the capacitive sensor suitable to determining the location of the user input relative to the geometry of the particular region 113 may be used.

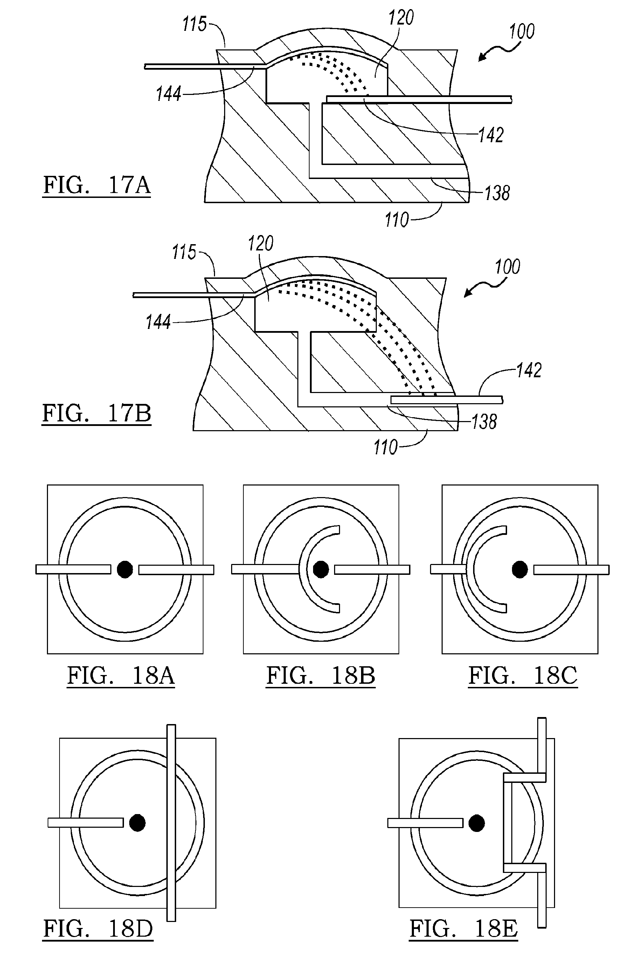

As shown in FIGURES 17a and 17b, the capacitive sensor of the second variation preferably senses the change in height in between a first conductor 142 and a second conductor 144. In this variation, the first conductor 142 is preferably placed in a location that moves when the user inwardly deforms the particular region 113 and the second conductor 144 is preferably placed in a location that remains relatively stationary when the user inwardly deforms the particular region 113. The second conductor 144 may be placed within the cavity 125, as shown in FIGURE 17a, but may alternatively be placed in any relatively stationary location within the user interface system 100, as shown in FIGURE 17b. In this arrangement, a change in the distance between the first and second conductors 142 and 144 will cause the measured capacitance in between the first and second conductors 142 and 144 to change, indicating a user input. The first conductor 142 may also be a flexible conductor such that the inward deformation of the particular region 113 may cause the first conductor 142 to similarly deform. This may allow the location of the user input relative to the geometry of the particular region 113 to be determined. For example, the capacitive sensor may also include a third conductor 146 and/or any suitable number of conductors that may facilitate accurately determining the location of the user input relative to the geometry of the particular region 113. The movement of the first conductor 142 may be detected by measuring the capacitive value between the first conductor 142 and the second conductor 144 and the capacitive value between the first conductor 142 and the third conductor 146. The difference between the two capacitive values may better indicate the location of the user input relative to the geometry of the particular region 113. Alternatively, the capacitance between the first conductor 142 and a first portion of the second conductor 144 may also be compared to the capacitance between the first conductor 142 and a second portion of the second conductor 144 to determine the relative difference in the height of the fluid 120. The relative difference in capacitive values between the two conductors 142 and 144 may facilitate the determination of the location of the user input relative to the geometry of the particular region 113. However, any other suitable arrangement and location of the conductors of the capacitive sensor of the second variation of the sensor 140 suitable to measuring distance differences between conductors due to inward deformation of the particular region 113 by the user may be used. The conductors of the second variation are preferably identical to the first conductor 142 in the first variation in material and manufacturing, but may alternatively made of any material or method suitable to providing a capacitive relationship indicating the distance between conductors.

As shown in FIGURE 18, the conductors of the capacitive sensor variation of the sensor 140 may be any one of a variety of arrangements and geometries. As mentioned above, both the first and second variations of the capacitive sensor may include at least two conductors (a first conductor and a second conductor). As shown in FIGURE 18a, the first and second conductors are preferably of the same shape within the cavity 125. Alternatively, as shown in FIGURES 18b-18e, the first conductor may be of a first geometry and the second conductor may be of a second geometry to increase accuracy in measuring changes in capacitance due to inward deformation of the particular region 113 by the user. For example, the second geometry may follow the geometry of the particular region 113 to facilitate the detection of deformations of the particular region 113, as shown in FIGURES 18b and 18c. The second conductor may be placed substantially close to the perimeter of the particular region 113, but may alternatively be placed substantially close to the center of the particular region 113. However, the second conductor may be placed in any location suitable to detecting the desired user inputs. Alternatively, as shown in FIGURES 18d and 18e, the second conductor may be placed perpendicular to the first conductor to allow deformations to be detected both along the axis of the first conductor and along the axis of the second conductor, expanding the region of sensitivity. Additionally, the second conductor may contain more than one portion wherein the capacitance between the first conductor and a first portion of the second conductor is compared to the capacitance between the first conductor and a second portion of the second conductor. However, any suitable arrangement or geometry of the first and second conductors may be used.

The sensor 140 may alternatively be a resistance sensor. Similar to the capacitive sensor, the resistance sensor preferably has at least two conductors and functions to measure the resistance in between the two conductors. In an example, the two conductors may be placed in two different locations within the cavity 125. The resistance between the two conductors may be of a first value in the retracted state and the resistance between the two conductors may be of a second value in the expanded state. When a user provides a force to inwardly deform the deformed particular region 113, the resistance between the two conductors may be of a third value that may be in between the first and the second value. This reading may be used to determine the occurrence of inward deformation of the expanded particular region 113, but may also be used to determine the degree of inward deformation of the expanded particular region 113 caused by the user.

The sensor 140 may alternatively be a pressure sensor. In this variation of the sensor 140, the fluid 120 is preferably of a volume that substantially fills the cavity 125 and is also preferably of a substantially incompressible fluid (e.g. water, oil), but may be of any other volume or fluid type wherein inward deformation of the particular region 113 will cause a measurable change in the volume of fluid 120 within the cavity 125. The pressure sensor preferably measures an increase in the pressure within cavity 125 when there is an inward deformation of the particular region 113. The pressure sensor is preferably an absolute pressure sensor, but may also be a differential pressure sensor or any other suitable type of pressure sensor. The pressure sensor may alternatively be a strain gauge mounted within and partially defining the cavity, which deforms when there is an inward deformation of the particular region 113. The pressure sensor of the sensor 140 may, however, be of any suitable type to measure pressure change within the cavity 125 due to inward deformation of the particular region 113.

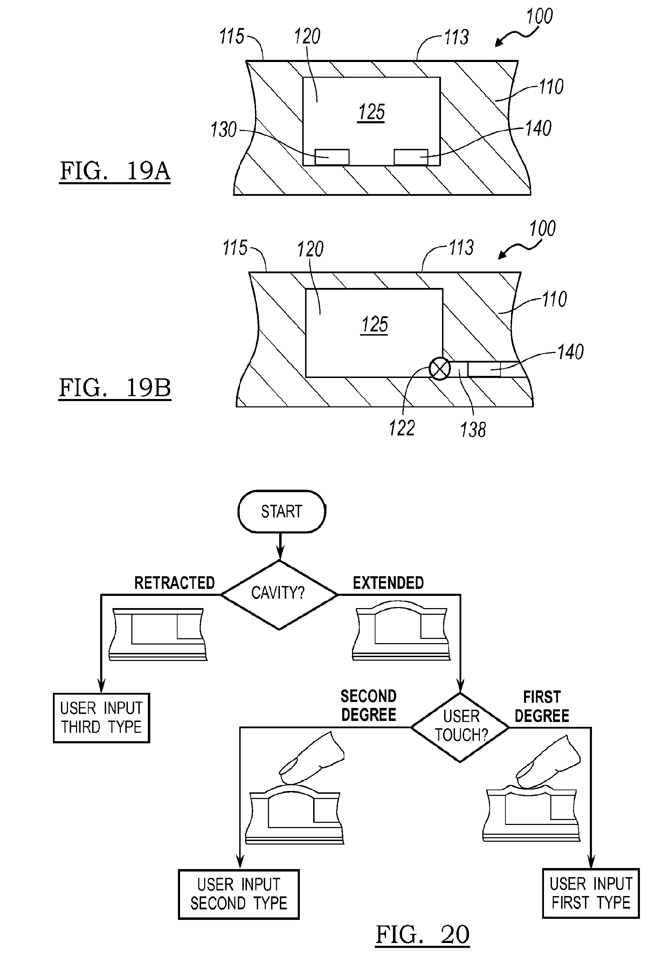

As shown in FIGURE 19b, the sensor 140 may alternatively be a flow sensor. The flow sensor preferably measures backflow of the fluid 120. In this variation, the cavity 125 is preferably coupled to a channel 138. When there is inward deformation of the particular region 113, the overall volume of the cavity 125 will decrease, forcing a volume of the fluid 120 to backflow through the channel 138. The flow sensor preferably detects and/or measures the backflow of the fluid 120 through the channel 138 to determine the occurrence of a deformation of the particular region 113 and/or the magnitude of deformation of the particular region 113. To measure the backflow, the flow sensor is preferably placed in a location in the channel 138 wherein fluid flow is only seen when there is backflow due to the inward deformation of the particular region 113. In one example, the channel 138 may also include a valve 122 that is normally closed to maintain a constant volume of fluid 120 within the cavity. When there is inward deformation of the particular region 113, the valve 122 is opened, allowing backflow to the rest of the channel 138. The flow sensor may be a flow rate sensor that measures the flow rate of the fluid. The volume of fluid 120 that flows through the channel 138 may be calculated from the known cross sectional area of the channel 138 and the flow rate. For demonstration and conciseness, the valve 122 and/or sensor 140 are shown to be located in relatively close proximity to the cavity 125 in FIGURE 19b. However, the valve 122 and/or sensor 140 may be placed in any other suitable location relative to the cavity 125 (for example, in a region not pictured in FIGURE 19b), that enables contact with fluid flowing through the channel 138. The pressure sensor may alternatively be a Hall effect sensor or any other type of sensor that senses the opening of the valve 122 due to the backflow of the fluid 120. However, the flow sensor may be any other type of fluid sensor that is able to detect and/or measure backflow of the fluid 120.

The sensor 140 may alternatively be a strain sensor. The strain gage sensor preferably measures the strain of the particular region 113 of the surface 115. By knowing the nominal strain of the particular region 113 of the surface 115 in the retracted volume setting and in the extended volume setting, the strain sensor identify when the particular region of the surface has been depressed in the extended volume setting. A plurality of strain sensors may facilitate determining the location of the user input relative to the particular region 113. Multiple strain gauges may be coupled either on, under, or within the surface, and the difference in deformation of one portion of the surface relative to another may help indicate the location of the user input relative to the particular region 113.

Because the capacitive, the resistance, the pressure, the flow, and the strain sensor variations of the sensor 140 may allow the location of a user input or a shift in the location of user input along the deformation of the particular region 113 (e.g., as the user "sweeps" from one location to another) to be detected, the sensor 140 of these variation may be applied to the slide and the pointing stick variations of the deformation of the particular region 113 described above.

The sensor 140 is preferably one of the variations described above, but may be any other sensor suitable to sensing the inward deformation of the particular region 113. The sensor 140 may also be of any suitable combination of the variations described above.

### 4. The Processor

The user interface system 100 of the preferred embodiment may also include a processor, which is coupled to the displacement device 130 and to the sensor 140. As shown in FIGURE 20, the processor 160 functions to operate the user interface system 100 in an Extended Cavity Mode and a Retracted Cavity Mode. In the Extended Cavity Mode when the particular region 113 of the surface is outwardly deformed, then a force of a first degree or magnitude applied by the user onto the deformed particular region of the surface 113 is preferably recognized as a user input of a first type. A force of a second degree or magnitude applied by the user onto the deformed particular region 113 of the surface, wherein the second degree is less than the first degree, is preferably recognized as a user input of a second type. In an example, if the force of the second degree is the result of the user resting his or her finger on the particular region 113, then the processor 160 preferably ignores the user input of the second type. In this manner, the deformation of the particular region 113 additionally functions to distance the user touch from the sensor 140 and to allow the user to rest their fingers on the deformation (the location of an input) without actuating the input. Alternatively, if the force of the second degree is the result of the user lightly applying force to the particular region 113, then the processor 160 may interpret the user input of the second type as an input of a lower magnitude than the user input of the first type. However, any other suitable relationship between the user input of the first type and the second type may be applied. The determination of whether the force applied by the user on the particular region 113 is of the first degree or the second degree may be set or modified by the manufacturer, the processor, and/or the user. In the Retracted Cavity Mode when the particular region 113 of the surface is not outwardly deformed, then a user touch at the particular region in the surface 115 is preferably not recognized as a user input of the first type or the second type, but rather as a user input of a third type that is distinguishable from a user input of the first type and the second type. The user input of the third type may also be ignored. Additionally, in the Extended Cavity Mode, a force applied by the user of a third degree, wherein the third degree is lower than the first degree but higher than the second degree, may be interpreted as a user input of a fourth type. However, any additional degrees of force applied by the user on the particular region 113 may be detected and interpreted as any suitable type of user input.

The processor 160 may also function to detect the rate at which the user applies a force to the particular region 160. In the Extended Cavity Mode when the particular region 113 of the surface is outwardly deformed, then a force applied at a first rate of change onto the deformed particular region of the surface 113 is preferably recognized as a user input of a first type. An applied force of a second rate of change onto the deformed particular region 113 of the surface, wherein the second rate is higher than the first rate, is preferably recognized as a user input of a second type. For example, the inward deformation of the particular region 113 may be interpreted by the processor 160 as an indication of the user to scroll through a webpage. When the user applies a force at the first rate, the processor will scroll through the webpage at a first speed. When the user applies a force at the second rate, then the processor will scroll through the website at a second speed, wherein the second speed is faster than the first speed. In this manner, the sensor 140 and the processor 160 are able to determine a larger range of user inputs from the inward deformation of the particular region 113. However, any other suitable relationship between the user input of the first type and the second type may be applied. The question of whether the force applied by the user on the particular region 113 is of the first rate or the second rate may be set or modified by the manufacturer, by the processor, or by the user. In the Retracted Cavity Mode when the particular region 113 of the surface is not outwardly deformed, then a user touch at the particular region in the surface 115 is preferably not recognized as a user input of the first type or the second type, but rather is recognized as a user input of a third type that is distinguishable from a user input of the first type and the second type. The user input of the third type may also be ignored. Additionally, in the Extended Cavity mode, a force applied by the user of a third rate of change, wherein the third rate is higher than the first rate but lower than the second rate, may be interpreted as a user input of a fourth type. However, any additional rate of change of force applied by the user on the particular region 113 may be detected and interpreted as any suitable type of user input.

The processor 160 may also function to automatically alter the settings of the user interface system 100. In a first example, in extremely low temperatures, it may be impossible for the displacement device 130 to modify the volume of the fluid to expand the cavity 125 and deform the particular region 113. The processor 160 may be coupled to a temperature sensor and may disable the displacement device 130 under such conditions. In a second example, in high altitude conditions (or in an airplane with reduced air pressure), it may be impossible for the displacement device 130 to modify the volume of the fluid to retract the cavity 125. The processor 160 may be coupled to a pressure sensor and may either disable the displacement device 130, or may simply adjust the volume of the fluid that is modified under such conditions.

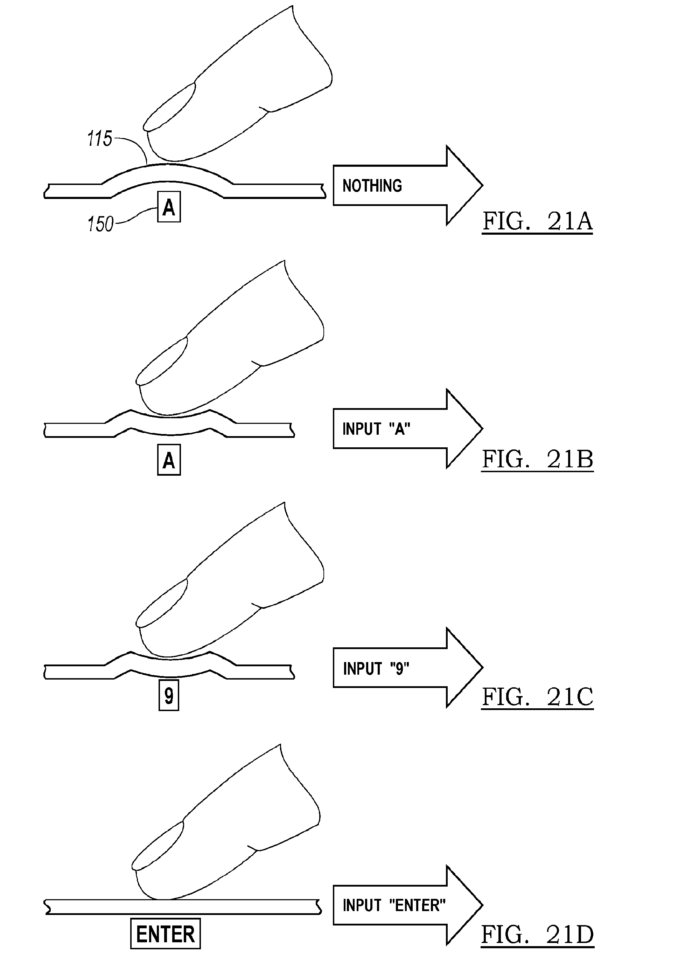

As shown in FIGURES 21a-21d, the processor 160 may also be coupled to the display 150 such that different input graphics may be displayed under the particular region 113, and different inputs may be recognized. As an example, when the cavity 125 is in the Extended Cavity Mode, as shown in FIGURE 21a, the display 150 may include an input graphic of a first type (such as a letter) and the user input on the deformation, as shown in FIGURE 21b, would be of a first type (such as a letter), and the display 150 may include an input graphic of a second type (such as a number) and the user input on the deformation would be of a second type (such as a number), as shown in FIGURE 21c. When the cavity 125 is in the Retracted Cavity Mode, the display 150 may further include an input graphic of a third type (such as an "enter" or "accept" input), and the user input on the sensor 140 would be of a third type (such as an "enter" or "accept" input), as shown in FIGURE 21d. The processor 160 may also be coupled to the device upon which the display 150 and the user interface system 100 are used and may function to control processes carried out by the device.

The processor 160 may also function to alter the output of the display 150 to correct or adjust for any optical distortion caused by the deformation of the particular region 113. It is envisioned that, in certain applications, the size of the deformation may cause a "fish eye" effect when viewing the display 150. The processor, preferably through empirical data, may adjust the output to help correct for this distortion.

The processor 160 preferably includes a separate and remote controller for the displacement device 130, a separate and remote controller for the sensor 140, and a separate and remote controller for the display 150. The processor 160 may, however, integrally include a controller for one or more of these elements.

The processor 160 preferably performs one of the functions described above, but may also perform any combination of the functions described above or any other suitable function.

### 5. Second Cavity

As shown in FIGURE 2, the user interface system 100 of an example of the invention also includes a second cavity 125. The additional cavities may be substantially identical to the cavity 125, but may also be different in construction, geometry, size, and/or any other suitable feature. Each of the plurality of cavities 125 are preferably able to outwardly deform independently from each other, allowing the user interface system 100 to be adapted to a variety of user input scenarios. Alternatively, the plurality of cavities 125 may be grouped into a plurality of portions, wherein the cavities 125 within one group will outwardly deform together. This may be applied to scenarios wherein a group of cavities 125 are assigned to a particular user input scenario, for example, as a dial pad on a mobile phone or as a QWERTY keyboard. The processor 160 preferably selectively controls the outward deformation of the particular region 113 of each cavity 125. However, any other suitable method of controlling the cavities 125 may be used.

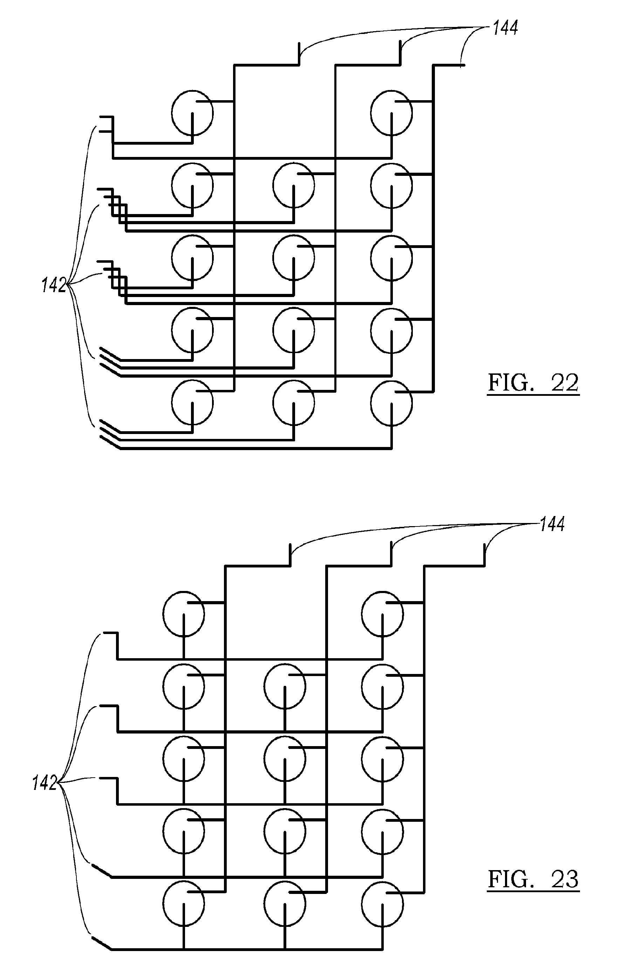

The processor 160 preferably also selectively receives and/or interprets signals representing the presence of a force applied by a user to any cavity 125. The sensor 140 for each cavity 125 is preferably arranged in an array network that preferably communicates the location of each sensor 140 to the processor 160 to allow the processor 160 to selectively receive and/or interpret signals coming from each cavity 125. In the variation of the sensor 140 as a capacitive sensor, as shown in FIGURES 22 and 23, the array includes a first number of X-conductors 142 and a second number of Y-conductors 144. In a first variation, as shown in FIGURE 22, the first number of X-conductors 142 is preferably equivalent to the number of cavities 125, wherein each X-first conductor 142 corresponds to one cavity 125, and the second number of Y-conductors 144 is preferably equivalent to the number of columns of cavities 125, wherein each Y-conductor 144 corresponds to all the cavities 125 within one column of cavities 125. In this first variation, the location of a user touch is preferably determined by detecting a change in the measured capacitance value between one X-first conductor 142 and the corresponding Y-conductor 144 for a particular cavity 125. Because each cavity 125 is associated with one X-first conductor 142, the processor 160 is able to detect the location of the cavity 125 over which the user had applied a force. In a second variation, as shown in FIGURE 23, the first number of X-conductors 142 is preferably equivalent to the number of rows of cavities 125, wherein each X-first conductor 142 corresponds to all the cavities 125 within one row of cavities 125, and the second number of Y-conductors 144 is preferably equivalent to the number of columns of cavities 113, wherein each Y-conductor 144 corresponds to all the cavities 113 within one column of cavities 144. In this second variation, the location of a user touch is preferably determined by detecting a change in the measured capacitance value between one X-first conductor 142 and one Y-conductor 144. Because each cavity 125 corresponds to a different intersection of the X-conductors 142 and the Y-conductors 144, the processor 160 is able to detect the location of the cavity 125 over which the user had applied force. In a third variation, the first number of X-conductors 142 and the second number of Y-conductors 144 are both preferably equivalent to the number of cavities 125, one X-first conductor 142 and one Y-conductor 144 correspond to one cavity 125. In this third variation, the location of a user touch is preferably determined by detecting a change in the measured capacitance value between one X-first conductor 142 and one Y-conductor 144. Because each cavity 125 corresponds to a different pair of the X-conductors 142 and the Y-conductors 144, the processor 160 is able to detect the location of the cavity 125 over which the user had applied force.

Alternatively, the array network of sensors 140 may include a plurality of sensors 140, each coupled to a cavity 125, that each output a signal specific to the cavity 125. For example, in the capacitive sensor variation of the sensor 140, the sensor 140 for a first cavity 125 may send a signal of 0.5nF when a user input is detected and a signal of 1nF when no user input is detected, the sensor 140 for a second cavity 125 may send a signal of 5nF when a user input is detected and a signal of 10nF when no user input is detected, the sensor 140 for a third cavity 125 may send a signal of 50nF when a user input is detected and a signal of 100nF when no user input is detected, and the sensor 140 for a fourth cavity 125 may send a signal of 500nF when a user input is detected and a signal of 1000nF when no user input is detected. Because each cavity 125 sends a different signal, the processor 160 is able to detect the location of the user input based upon the type and/or value of the signal that is received from the sensors 140. The plurality of sensors 140 for the cavities 125 may also be arranged in a parallel relationship (such that the overall capacitive value for a plurality of capacitors in parallel equate to the sum of the individual capacitive values) to facilitate the processor 160 in sensing the location of the user input. For example, using the aforementioned example values for the signals from the sensors 140 of a first, second, third, and fourth cavities 140, the processor 160 may receive a combined signal of 555.5nF from the sensors 140 when a user input is detected from all of the first, second, third, and fourth cavities 125 and a signal of 1111nF from the sensors 140 when no user input is detected from any of the first, second, third, and fourth cavities 125. When a user input is detected from the third cavity 125 and not from the first, second, and fourth cavities 125, then the combined signal to the processor 160 may be 1061nF. Similarly, when a user input is detected from both the second and third cavities 125, then the combined signal to the processor 160 may be 1056nF. The processor 160 is then able to interpret the locations of the user input directly from the value of the signal that is received from a plurality of sensors 140 of the cavities 125, simplifying electrical routing, mechanical components, and programming in the user interface system 100. The sensors 140 may also be arranged in series or in any other suitable electrical arrangement.

The array arrangements described above also provide the advantage of utilizing multiple sensors 140 to more accurately locate the presence of a user input. User input onto a first expanded particular region 113 may affect the sensor 140 readings for a second expanded particular region 113. By collectively analyzing readings from multiple sensors 140, the particular region 113 upon which the user provides an input may be more accurately determined. For example, in the variation wherein the sensor 140 is a pressure sensor, the pressure sensed by other sensors 140 within the system may be increased when a user provides input at a first particular region 113. By sensing the increase of pressure sensed by sensors 140 adjacent to a particular region 113, the location of the user input may be more accurately determined. Additionally, the array arrangements described above allows for multiple inputs provided at a single time to be detected by the system.

The sensors 140 are preferably located within the cavities 125, but may alternatively be located adjacent to the cavities 125 or both within and adjacent to the cavities 125. By placing sensors 140 both within and adjacent to the cavities 125, user inputs provided to locations other than the particular regions 113 may also be detected, expanding the range of input types and query types for the device. Sensors 140 placed adjacent to the cavities 125 may also be used to more accurately locate the particular region 113 upon which the user provided the input.

The sensor 140, cavity 140, and second cavity 140 may are preferably in arranged in one of the variations described above, but may also be any combination of the variations described above. However, any other suitable arrangement or method of controlling the cavities 125 may be used.

### 6. Power Source

The user interface system 100 of examples of the invention may also include either a power source or a power harnessing device, which both function to power the displacement device 130 (and possibly other elements of the user interface system, such as the sensor 140 and/or the display 150). The power source is preferably a conventional battery, but may be any suitable device or method that provides power to the displacement device 130. The power-harnessing device, which is preferably integrated into the hinge of a flip phone or laptop, functions to harness a portion of the energy involved in the normal use of the electronic device (such as the physical energy provided by the user in the opening of a flip phone or the screen on a laptop). The power-harnessing device may alternatively be integrated in a separate mechanical input device (such as a button on the side of a mobile phone, or a "self-winding" device found in automatic watches) or any other suitable device or method to harness a portion of the energy involved in the normal use of the electronic device.

As a person skilled in the art will recognize from the previous detailed description and from the figures and claims, modifications and changes can be made to the preferred embodiments of the invention without departing from the scope of this invention defined in the following claims.

## Claims

1. A user interface system, comprising:
• a layer portion (116) defining a surface (115) and a particular region (113);
• a substrate (118) coupled to the layer portion opposite the surface, cooperating with the layer portion to define a cavity (125) at the particular region (113) , and comprising a fluid channel (138) coupled to the cavity;
• a volume of fluid (120) contained within the cavity;
• a displacement device (130) coupled to the fluid channel and configured to displace fluid into the cavity to transition the particular region (113) from the retracted volume setting into an expanded volume setting causing outward deformation of the particular region; and
• a sensor (140) comprising a first conductor (142) coupled to the substrate (118) and a second conductor (144) coupled to the layer portion at the particular region; and
• a processor (160) coupled to the sensor and configured to detect an input on the surface at the particular region in the expanded volume setting in response to a detected change in a distance between the first conductor and the second conductor,
**characterized in that** the substrate further defines a support member (112) extending into the cavity, the support member (112) configured as follows:
disconnected from the layer portion in the particular region; in contact with the particular region (113) of the layer in a retracted volume setting; and supporting the particular region of the layer against inward deformation in to the cavity in the retracted volume setting, wherein the surface at the particular region configured to be flush or continuous with the surface at an adjacent region in the retracted volume setting such that when swiping a finger across the surface 115 a user would not feel any interruptions or seams.

2. A user interface system according to claim 1, further comprising: a display (150) coupled to the substrate opposite the layer and configured to visually output an image.

3. A user interface system according to claim 2, wherein the volume of fluid (120) cooperates with at least one of the layer and the substrate to transmit the image through the layer and the substrate.

4. A user interface system according to claim 1, wherein the second conductor is coupled to the layer (116)

5. The user interface system of any of Claims 1 to 4, wherein the second conductor is arranged within the cavity.

6. The user interface system of Claim 1, wherein the sensor comprises a capacitive sensor.

7. The user interface system of any of Claims 1 to 6, wherein the processor is configured to determine a magnitude of the force, to compare the magnitude of the force to a threshold, to identify a first input type in response to the magnitude of the force that is less than the threshold, and to identify a second input type in response to the magnitude of the force that is greater than the threshold.

8. The user interface system of any of Claims 1 to 6, wherein the processor is configured to determine a change rate of the detected force, to compare the change rate of the detected force to a threshold, to identify a first input type in response to the change rate of the force that is less than the threshold, and to identify a second input type in response to the change rate of the force that is greater than the threshold.

9. The user system user interface of any of Claims 1 to 4, wherein the substrate cooperates with the layer to further define a second cavity (125), wherein expansion of the second cavity outwardly deforms a second particular region of the surface, and wherein the processor detects an input on the surface at the particular region independently of an input on the surface at the second particular region.

10. The user interface system of Claim 9, wherein the sensor comprises an array of first conductors, each first conductor in the array of first conductors corresponding to one cavity, the processor configured to detect an input on the surface substantially proximal each first conductor.

11. The user interface system of Claim 10, wherein the sensor comprises a first number of first conductors and a second number of second conductors, the first number equivalent to a number of cavities defined by the substrate and the layer, the second number less than the number of cavities defined by the substrate and the layer, each first conductor in the first number of first conductors corresponding to one cavity, and each second conductor in the second number of second conductors corresponding to a plurality of cavities.

12. The user interface system of Claim 1, further comprising a display (150) coupled to the substrate opposite the layer and configured to visually output an image through the surface of the layer to a user, the image of an input key substantially aligned with the particular region of the layer.

13. The user interface system of Claim 1, wherein the second conductor is a virtual ground conductor arranged within the layer at the particular region.

## Patentansprüche

1. Benutzeroberflächensystem, umfassend:
• einen Schichtteil (116), der eine Oberfläche (115) und eine besondere Region (113) definiert;
• ein Substrat (118), das gegenüber der Oberfläche mit dem Schichtteil gekoppelt ist, mit dem Schichtteil zusammenwirkt, um an der besonderen Region (113) einen Hohlraum (125) zu definieren, und einen mit dem Hohlraum gekoppelten Fluidkanal (138) aufweist;
• ein in dem Hohlraum enthaltenes Fluidvolumen (120);
• eine Verdrängungsvorrichtung (130), die mit dem Fluidkanal gekoppelt und zum Verdrängen von Fluid in den Hohlraum gestaltet ist, um die besondere Region (113) von der Einstellung mit eingezogenem Volumen in eine Einstellung mit ausgedehntem Volumen übergehen zu lassen, was eine Verformung der besonderen Region nach außen veranlasst; und
• einen Sensor (140), der einen ersten Leiter (142), der mit dem Substrat (118) gekoppelt ist, und einen zweiten Leiter (144), der an der besonderen Region mit dem Schichtteil gekoppelt ist, aufweist; und
• einen Prozessor (160), der mit dem Sensor gekoppelt ist und zum Erkennen einer Eingabe an der Oberfläche an der besonderen Region in der Einstellung mit ausgedehntem Volumen als Reaktion auf eine erkannte Änderung einer Entfernung zwischen dem ersten Leiter und dem zweiten Leiter konfiguriert ist,
**dadurch gekennzeichnet, dass** das Substrat ferner ein Stützelement (112) definiert, das sich in den Hohlraum erstreckt, wobei das Stützelement (112) wie folgt konfiguriert ist:
in der besonderen Region von dem Schichtteil abgetrennt; in einer Einstellung mit eingezogenem Volumen mit der besonderen Region (113) der Schicht in Kontakt und in der Einstellung mit eingezogenem Volumen die besondere Region der Schicht gegen Einwärtsverformung in den Hohlraum stützend, wobei die Oberfläche an der besonderen Region konfiguriert ist, um in der Einstellung mit eingezogenem Volumen mit der Oberfläche an einer angrenzenden Region bündig oder kontinuierlich zu sein, so dass ein Benutzer beim Streichen eines Fingers über die Oberfläche 115 keine Unterbrechungen oder Nähte spüren würde.

2. Benutzeroberflächensystem nach Anspruch 1, das ferner Folgendes aufweist: eine Anzeige (150), die gegenüber der Schicht mit dem Substrat gekoppelt ist und zur visuellen Ausgabe eines Bilds konfiguriert ist.

3. Benutzeroberflächensystem nach Anspruch 2, wobei das Fluidvolumen (120) mit der Schicht und/oder dem Substrat zusammenwirkt, um das Bild durch die Schicht und das Substrat durchzulassen.

4. Benutzeroberflächensystem nach Anspruch 1, wobei der zweite Leiter mit der Schicht (116) gekoppelt ist.

5. Benutzeroberflächensystem nach einem der Ansprüche 1 bis 4, wobei der zweite Leiter in dem Hohlraum angeordnet ist.

6. Benutzeroberflächensystem nach Anspruch 1, wobei der Sensor einen kapazitiven Sensor umfasst.

7. Benutzeroberflächensystem nach einem der Ansprüche 1 bis 6, wobei der Prozessor konfiguriert ist zum Ermitteln einer Größe der Kraft, zum Vergleichen der Größe der Kraft mit einem Schwellenwert, zum Identifizieren eines ersten Eingabetyps als Reaktion auf die Größe der Kraft, die kleiner als der Schwellenwert ist, und zum Identifizieren eines zweiten Eingabetyps als Reaktion auf die Größe der Kraft, die größer als der Schwellenwert ist.

8. Benutzeroberflächensystem nach einem der Ansprüche 1 bis 6, wobei der Prozessor konfiguriert ist zum Ermitteln einer Änderungsgeschwindigkeit der erkannten Kraft, zum Vergleichen der Änderungsgeschwindigkeit der erkannten Kraft mit einem Schwellenwert, zum Identifizieren eines ersten Eingabetyps als Reaktion auf die Änderungsgeschwindigkeit der Kraft, die kleiner als der Schwellenwert ist, und zum Identifizieren eines zweiten Eingabetyps als Reaktion auf die Änderungsgeschwindigkeit der Kraft, die größer als der Schwellenwert ist.

9. Benutzeroberflächensystem nach einem der Ansprüche 1 bis 4, wobei das Substrat mit der Schicht zusammenwirkt, um ferner einen zweiten Hohlraum (125) zu definieren, wobei die Ausdehnung des zweiten Hohlraums nach außen eine zweite besondere Region der Oberfläche verformt und wobei der Prozessor eine Eingabe an der Oberfläche an der besonderen Region unabhängig von einer Eingabe an der Oberfläche an der zweiten besonderen Region erkennt.

10. Benutzeroberflächensystem nach Anspruch 9, wobei der Sensor eine Anordnung erster Leiter aufweist, wobei jeder erste Leiter in der Anordnung von ersten Leitern einem Hohlraum entspricht, wobei der Prozessor zum Erkennen einer Eingabe an der Oberfläche, die im Wesentlichen proximal zu jedem ersten Leiter ist, konfiguriert ist.

11. Benutzeroberflächensystem nach Anspruch 10, wobei der Sensor eine erste Anzahl erster Leiter und eine zweite Anzahl zweiter Leiter aufweist, die erste Anzahl mit einer Anzahl von Hohlräumen, die von dem Substrat und der Schicht definiert werden, äquivalent ist, die zweite Anzahl kleiner ist als die Anzahl von Hohlräumen, die von dem Substrat und der Schicht definiert werden, jeder erste Leiter in der ersten Anzahl von ersten Leitern einem Hohlraum entspricht und jeder zweite Leiter in der zweiten Anzahl von zweiten Leitern mehreren Hohlräumen entspricht.

12. Benutzeroberflächensystem nach Anspruch 1, das ferner eine Anzeige (150) aufweist, die mit dem Substrat gegenüber der Schicht gekoppelt ist und zur visuellen Ausgabe eines Bilds durch die Oberfläche der Schicht zu einem Benutzer konfiguriert ist, wobei das Bild einer Eingabetaste im Wesentlichen auf die besondere Region der Schicht ausgerichtet ist.

13. Benutzeroberflächensystem nach Anspruch 1, wobei der zweite Leiter ein virtueller Erdungsleiter ist, der in der Schicht an der besonderen Region angeordnet ist.

## Revendications

1. Système d'interface utilisateur comprenant :
• une partie couche (116) définissant une surface (115) et une région particulière (113) ;
• un substrat (118) rattaché à la partie couche du côté opposé à la surface, coopérant avec la partie couche de façon à définir une cavité (125) au niveau de la région particulière (113), et comportant une voie de fluide (138) raccordée à la cavité ;
• un volume de fluide (120) contenu à l'intérieur de la cavité ;
• un dispositif de déplacement (130) raccordé à la voie de fluide et configuré de façon à déplacer du fluide dans la cavité pour faire passer la région particulière (113) du réglage à volume diminué à un réglage à volume augmenté, causant une déformation extérieure de la région particulière ; et
• un capteur (140) comportant un premier conducteur (142) couplé au substrat (118) et un deuxième conducteur (144) couplé à la partie couche au niveau de la région particulière ; et
• un processeur (160) couplé au capteur et configuré de façon à détecter une entrée sur la surface au niveau de la région particulière dans le réglage à volume augmenté en réponse à un changement détecté dans une distance entre le premier conducteur et le deuxième conducteur,
**caractérisé en ce que** le substrat définit en outre un élément de support (112) s'étendant dans la cavité, cet élément de support (112) étant configuré de la manière suivants :
détaché de la partie couche dans la région particulière ; en contact avec la région particulière (113) de la couche dans un réglage à volume diminué ; et supportant la région particulière de la couche contre une déformation vers l'intérieur dans la cavité dans le réglage à volume diminué, la surface au niveau de la région particulière étant configurée de façon à être à ras de, ou continue avec, la surface au niveau d'une région adjacente dans le réglage à volume diminué de manière à ce que, lorsqu'un utilisateur glisse un doigt sur la surface (115), il ne sente aucune interruption ou jonction.

2. Système d'interface utilisateur selon la revendication 1, comprenant en outre : un afficheur (150) rattaché au substrat du côté opposé à la couche et configuré de façon à fournir visuellement une image.

3. Système d'interface utilisateur selon la revendication 2, dans lequel le volume de fluide (120) coopère avec au moins soit la couche, soit le substrat, pour transmettre l'image à travers la couche et substrat.

4. Système d'interface utilisateur selon la revendication 1, dans lequel le deuxième conducteur est couplé à la couche (116).

5. Système d'interface utilisateur selon l'une quelconque des revendications 1 à 4, dans lequel le deuxième conducteur est disposé à l'intérieur de la cavité.

6. Système d'interface utilisateur selon la revendication 1, dans lequel le capteur consiste en un capteur capacitif.

7. Système d'interface utilisateur selon l'une quelconque des revendications 1 à 6, dans lequel le processeur est configuré de façon à déterminer une grandeur de la force, à comparer la grandeur de la force avec un seuil, à identifier un premier type d'entrée en réponse à la grandeur de la force qui est inférieure au seuil, et à identifier un deuxième type d'entrée en réponse à la grandeur de la force qui est supérieure au seuil.

8. Système d'interface utilisateur selon l'une quelconque des revendications 1 à 6, dans lequel le processeur est configuré de façon à déterminer une vitesse de changement de la force détectée, à comparer la vitesse de changement de la force détectée avec un seuil, à identifier un premier type d'entrée en réponse à la vitesse de changement de la force qui est inférieure au seuil, et à identifier un deuxième type d'entrée en réponse à la vitesse de changement de la force qui est supérieure au seuil.

9. Système d'interface utilisateur selon l'une quelconque des revendications 1 à 4, dans lequel le substrat coopère avec la couche de façon à définir en outre une deuxième cavité (125), l'expansion de cette deuxième cavité vers l'extérieur déformant une deuxième région particulière de la surface, et le processeur détectant une entrée sur la surface au niveau de la région particulière indépendamment d'une entrée sur la surface au niveau de la deuxième région particulière.

10. Système d'interface utilisateur selon la revendication 9, dans lequel le capteur comporte un réseau de premiers conducteurs, chaque premier conducteur dans le réseau de premiers conducteurs correspondant à une cavité, le processeur étant configuré de façon à détecter une entrée sur la surface essentiellement proximale à chaque premier conducteur.

11. Système d'interface utilisateur selon la revendication 10, dans lequel le capteur comprend un premier nombre de premiers conducteurs et un deuxième nombre de deuxièmes conducteurs, le premier nombre étant équivalent à un nombre de cavités définies par le substrat et la couche, le deuxième nombre étant moins que le nombre de cavités définies par le substrat et la couche, chaque premier conducteur dans le premier nombre de premiers conducteurs correspondant à une cavité, et chaque deuxième conducteur dans le deuxième nombre de deuxièmes conducteurs correspondant à une pluralité de cavités.

12. Système d'interface utilisateur selon la revendication 1, comprenant en outre un afficheur (150) rattaché au substrat du côté opposé à la couche et configuré de façon à fournir visuellement à un utilisateur une image à travers la surface de la couche, l'image d'une touche d'entrée essentiellement alignée avec la région particulière de la couche.

13. Système d'interface utilisateur selon la revendication 1, dans lequel le deuxième conducteur est un conducteur de terre virtuel disposé à l'intérieur de la couche au niveau de la région particulière.
